# EUROPÄISCHE PATENTSCHRIFT

(11) **EP 1 697 656 B1**
(45) Veröffentlichungstag und Bekanntmachung des Hinweises auf die Patenterteilung: **16.07.2008**
(21) Anmeldenummer: 04765824.0
(22) Anmeldetag: 05.10.2004
(51) Int. Cl.: F16H 7/12

(54) **AUTOMATISCHER RIEMENSPANNER**
AUTOMATIC BELT TENSIONER
TENDEUR DE COURROIE AUTOMATIQUE

(30) Priorität: 22.12.2003 DE 20319886 U
(43) Veröffentlichungstag der Anmeldung: 06.09.2006
(73) Patentinhaber: Litens Automotive GmbH, 63571 Gelnhausen (DE)
(72) Erfinder: FISCHER, Michael, 97778 Fellen (DE); GUHR, Wolfgang, 63584 Gründau (DE)
(74) Vertreter: Grünecker, Kinkeldey, Stockmair & Schwanhäusser Anwaltssozietät
(86) Internationale Anmeldenummer: PCT/EP2004/011114
(87) Internationale Veröffentlichungsnummer: WO 2005/064201

(56) Entgegenhaltungen:
- EP-A- 0 450 620
- DE-A- 4 326 710
- DE-A- 4 426 666

## Beschreibung

Die Erfindung betrifft einen automatischen Riemenspanner mit den Merkmalen des Oberbegriffs des Anspruchs 1.

Aus der DE 4010 928 C2 und der gattungsgemäßen EP 0 450 620 A1 geht ein automatischer Riemenspanner dieser Art zum Spannen eines Riemens in einem Riemenantriebssystem hervor. Damit soll über die gesamte Lebensdauer eine Riemenspannung aufrechterhalten werden. Der Riemen wird über ein sich an einem Spannausleger befindliches Laufrad gespannt.

Je nach Einsatzbedingung des automatischen Riemenspanners, wird der Riemen durch die treibenden und getriebenen Aggregate in unterschiedliche Schwingungszustände versetzt. Die Schwingungen des Riemens werden über den Spannausleger auf das Gehäuse des automatischen Riemenspanners übertragen. Die Schraubenfeder ist an einem Ende mit Windungen auf einer Schlingbuchse abgestützt, welche die auf sie einwirkenden Kräfte auf eine Federbuchse überträgt. Die Schlingbuchse sorgt für eine gleichmäßigere Verteilung der Reibungskraft zu der Federbuchse. Damit können höhere Momente erzielt werden und es erfolgt eine wirksamere Dämpfung. Die Schlingbuchse ist zudem ein wirksamer Halt für die Windungen der Schraubenfeder und ist im Betrieb in die Dämpfungsarbeit mit einbezogen. Trotz der im laufenden Betrieb auftretenden Reibungsarbeit sollen die dabei zusammenwirkenden Teile diese Eigenschaften möglichst ohne Nachlassen der Funktion aufrechterhalten.

Die DE 44 26 666 A1 zeigt eine Einrichtung zur Dämpfung von Federschwingungen. Diese besteht aus einem Basisteil und einem Spannrollenträger, welche auf einer zentralen Welle teilweise konzentrisch zueinander angeordnet sind. Beide Bauteile sind über eine Torsionsfeder miteinander verbunden. Bei einer Auslenkung des Spannrollenträgers bewirkt die Feder ein entsprechendes Rückstollmoment. Um die durch die Federbelastungen auftretenden Schwingungen zu vermindern, ist im inneren der Torsionsfeder eine Spannbuchse vorgesehen. Diese ist in Folge ihrer radialen Vorspannung in ständigem Kontakt mit den Windungen der Feder und dämpft so, durch die entstehende Reibung zwischen Federwindungen und Außenfläche der Spannbuchse die Schwingungen der Torsionsfeder. Die Auslenkbewegungen des Spannrollenträgers werden durch Reibelemente am vorderen Ende der zentralen Welle gedämpft. Die Dämpfung des Riemenspanners bleibt damit über den gesamten Auslenkbereich des Spannrollenträgers gleich. Sie ist unabhängig von der Federbelastung, also nicht dynamisch.

Der Erfindung liegt die Aufgabe zugrunde, einen gattungsgemäßen Riemenspanner dahingehend zu verbessern, dass er bei einer einfachen Konstruktion eine gute Dämpfung und gute Federeigenschaft möglichst über die gesamte Lebensdauer des Riemenspanners gewährleistet, sowie universell einsetzbar ist.

Diese Aufgabe wird erfindungsgemäß gelöst mit einem Riemenspanner mit den Merkmalen des Anspruches 1. kommt. Das aus verstärktem Kunststoff bestehende Material der Schlingbuchse ist gegenüber der Gattung, deren Schlingbuchse aus Nichteisenmetall besteht, ausreichend zäh und verschleißfest. Damit kann über die gesamte Lebensdauer des automatischen Riemenspanners an den Fügestellen zu den benachbarten Bauteilen, insbesondere der Schraubenfeder, auftretende Reibung aufgenommen werden. Die Eigenschaften der Dämpfung des Riemenspanners bleiben infolgedessen ebenfalls über die gesamte Lebensdauer des Riemenspanners annähernd gleich. Die Schlingbuchse ist verschleißfester und bleibt formstabiler.

Gemäß einer besonderen Möglichkeit kann der Kunststoff faserverstärkt sein. Dabei kann der Kunststoff insbesondere Glasfasern zur Verstärkung enthalten. Die Fasern versteifen den ansonsten weichen Kunststoff ausreichend, damit die Schraubenfeder einen guten Sitz und Halt auf der Schlingbuchse findet. Trotzdem bleibt die Schlingbuchse ausreichend flexibel für Federbewegungen und ist verschleißfester.

Besonders vorteilhaft könnte sich bei dieser Vorrichtung ein kugelverstärkter Kunststoff auswirken, der insbesondere Glaskugeln zur Verstärkung enthält. Diese Ausführungsform der Erfindung ist für hohe Riemenspannungen geeignet und ist dauerhaft gut formstabil und verschleißfest.

Günstigerweise kann die Schlingbuchse links- und rechtsgängige Schraubenfedern aufnehmen. Dieselbe Schlingbuchse ist somit universell mit links- oder rechtsgängigen Schraubenfedern bestückbar, je nach Spannungsrichtung am Einbauort.

In besonderer Weise kann eine Randkante der Schlingbuchse eine in einem Bereich den Verlauf einer linksgängigen und in einem anderen Bereich den Verlauf einer rechtsgängigen Federwindung entsprechenden Steigung ausweisen. Die Randkante stützt eine mögliche Federwindung der Schraubenfeder ausreichend gut ab und die erzeugte Schlingkraft möglichst ohne Kraft- und Momentenverluste auf die Schlingbuchse übertragen werden kann.

Besonders vorteilhaft kann der automatische Riemenspanner ausgestaltet werden, wenn die Schraubenfeder die Schlingbuchse mit weniger als einer ganzen Windung umschlingt, insbesondere mit mehr oder gleich einer halben oder 0,7 Windungen. Damit wird ein ausreichend großer Einwirkbereich der radialen Schlingkraft auf die Schlingbuchse gewährleistet. Wider Erwarten reicht dieser kleine Umschlingungsbereich aus, um zum einen möglichst kontinuierlich die Riemenspannung eines Riemens zu halten und zum anderen eine genügend große Stabilität und Reibung an den benachbarten Bauteilen für die Schwingungsdämpfung zu erzeugen.

Bei einer weiteren Variante der Erfindung, kann die Schlingbuchse an ihrem freien Ende eine gebrochene Randkante aufweisen. Diese fasenartige Ausgestaltung gewährleistet einen sanften Abgang der Federwindung von der Schlingbuchse.

Besonders vorteilhaft kann der automatische Riemenspanner ausgestaltet werden, wenn die Schlingbuchse eine Federbuchse wenigstens bereichsweise umschlingt und die Schlingbuchse in ihrem Umfang wenigstens eine Aussparung aufweist, die sich mit einem in der Federbuchse befindlichen Absatz in Umfangsrichtung und/oder in axialer Richtung in Eingriff befindet. Dabei wird die Schlingbuchse gegenüber der Federbuchse axial verschiebesicher und/oder verdrehsicher fixiert.

Eine besondere Möglichkeit kann es sein, wenn der Absatz der Federbuchse in axialer Richtung eine geneigte Fläche aufweist, welche die Schlingbuchse beim Montieren bis zu der Eingriffsstellung aufweitet. Damit wird ein einfaches Aufschieben der Schlingbuchse auf die Federbuchse gewährleistet.

Bei einer weiteren Variante der Erfindung kann eine dem freien Ende gegenüberliegende Randkante der Schlingbuchse wenigstens ein Halteabsatz aufweisen, der sich mit einer in der Federbuchse befindlichen Aussparung verdrehsicher im Eingriff befindet. Dadurch wird die Schlingbuchse gegenüber der Federbuchse in ihrer Position verdrehsicher fixiert.

Besonders vorteilhaft ausgestaltet kann die Federbuchse an ihrer Innenseite wenigstens eine Vertiefung zur Aufnahme von Schmiermittel aufweisen. Durch die Vertiefung kann über die gesamte Lebensdauer des Riemenspanners genügend Schmiermittel gespeichert und abgegeben werden. Die Zufuhr des Schmiermittels auf der Innenseite der Federbuchse begünstigt das Reib- und Dämpfungsverhalten zu dem einen angrenzenden Bauteil.

In besonderer Weise kann die Vertiefung sich in axialer Richtung erstrecken, insbesondere können sie im Querschnitt kerbenartig ausgebildet sein. Über die Erstreckungslänge wird die Innenseite der Federbuchse mit ausreichend Schmiermittel benetzt. Daneben wird durch die kerbenartige Vertiefung ein ausreichend großer Schmiermittelvorrat bzw. eine Schmiermittelzufuhr für die Schwingungsdämpfung gewährleistet.

Günstigerweise kann eine von der Schlingbuchse wenigstens bereichsweise umgebene Federbuchse einen stützenden Fußbund aufweisen welcher in mehrere über den Umfang verteilte Bereiche unterbrochen sein kann. Der Fußbund kann die Federbuchse mit ihren angefügten Bauteilen gegenüber dem Basisteil sehr form- und lagestabil abstützen und bedeutet bei geringen Materialeinsatz nur wenig Mehrgewicht.

Bei einer weiteren Variante der Erfindung kann eine von der Schlingbuchse wenigstens bereichsweise umgebende Federbuchse einen stützenden Fußbund aufweisen, wobei wenigstens ein Bereich des Fußbundes eine auskragende Federendenauflage aufweist. Dadurch wird ein freies Federende der Schraubenfeder sehr gut bis zu einem Einrastbereich der Federenden im Basisteil gestützt.

Bei einer weiteren Variante der Erfindung umgibt die Schlingbuchse eine Federbuchse wenigstens bereichsweise, wobei die Schlingbuchse und die Federbuchse gemeinsam in einem Mehrkomponentenwerkzeug hergestellt sind.

Ein Ausführungsbeispiel der Erfindung ist in der Zeichnung dargestellt und wird nachstehend erläutert.

Es zeigen:
- Figur 1: eine Schnittzeichnung eines erfindungsgemäßen automatischen Riemenspanners,
- Figur 2: eine perspektivische Ansicht einer Schlingbuchse eines erfindungsgemäßen Riemenspanners,
- Figur 3: eine Seitenansicht der Schlingbuchse von Figur 2,
- Figur 4: eine perspektivische Darstellung einer erfindungsgemäßen Schling- und einer Federbuchse im Zusammenbau,
- Figur 5: eine perspektivische Darstellung der Federbuchse mit Schlingbuchse in einer gegenüber Figur 4 um 90° gedrehten Ansicht und
- Figur 6: eine perspektivische Darstellung einzelner Windungen einer Schraubenfeder die die auf der Federbuchse sitzende Schlingbuchse umschlingt.

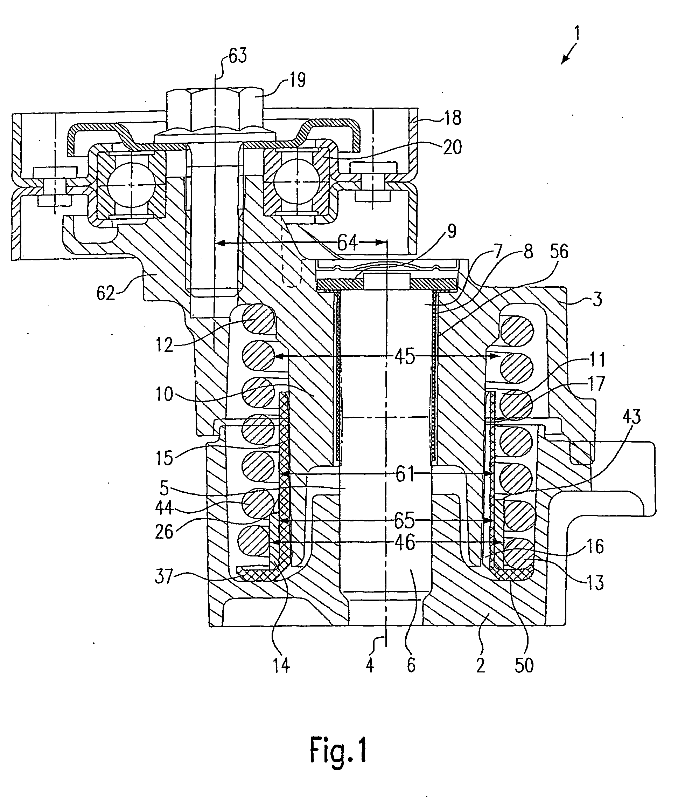

Figur 1 zeigt einen Zusammenbau des erfindungsgemäßen automatischen Riemenspanners 1.

Sie zeigt ein Basisteil 2, das relativ zu einem Spannteil 3 um eine gemeinsame Drehachse 4 drehbar ist. Die gemeinsame Drehachse 4 verläuft zentrisch in axialer Richtung in einem Bolzen 5. Das eine Ende 6 des Bolzens 5 ist mit dem Basisteil 2 fest verbunden. Auf dem gegenüberliegenden Ende 7 des Bolzens 5 wird eine aufgepresste Bundbuchse 8 mit Hilfe einer Scheibe 9 festgehalten.

Das Spannteil 3 ist topfförmig mit einer inneren Wandung 10 ausgestaltet. Die innere Wandung 10 besitzt eine Innenseite 56 und eine Außenseite 17. Das Spannteil 3 ist über seine Innenseite 56 mit der Bundbuchse 8 drehbar um die gemeinsame Drehachse 4 verbunden.

Eine Schraubenfeder 11 ist um die Außenseite 17 der inneren Wandung 10 des Spannteils 3 angeordnet. Dabei befindet sich eine Windung 12 der Schraubenfeder 11 mit ihrem einen Federende im Eingriff mit dem Spannteil 3 und stützt sich an diesem ab.

An dem anderen Federende ist die letzte Windung 13 auf der gegenüberliegenden Seite der Schraubenfeder 11 mit dem Basisteil 2 verbunden und stützt sich daran ab.

Die Schraubenfeder 11 umschlingt eine Schlingbuchse 14 mit etwas mehr als einer Windung 13, 44. Die übrigen Windungen liegen an der Schlingbuchse und der Federbuchse 15 nicht an.

Die Schlingbuchse 14 umgibt die Federbuchse 15 und liegt daran an. Der Außendurchmesser 46 der Schlingbuchse 14 ist ca. 1 mm größer als der Innendurchmesser 45 der Schraubenfeder 11 im entspannten Zustand. Durch den größeren Außendurchmesser 46 der Schlingbuchse 14 wird die Schraubenfeder 11 in dem dargestellten montierten Zustand vorgespannt.

Die Innenseite der Federbuchse 16 ist mit der Außenseite 17 der Wandung 10 des Spannteils 3 reibschlüssig verbunden. Die Federbuchse 15 stützt sich mit einem Fußbund 37 gegenüber dem Basisteil 2 an der Bodenfläche 50 ab.

Eine Spannrolle 18 ist mit Hilfe einer Schraube 19 über ein Radiallager 20 mit einem an dem Spannteil 3 ausgebildeten Umlenkarm 62 drehbar verbunden. Der Umlenkarm 62 ist von der gemeinsamen Drehachse 4 in axialer Richtung parallel beabstandet angeordnet. Dabei wird ein Hebelarm 64 geometrisch gebildet, dessen Hebellänge der Abstand zwischen einer Drehachse 63 der Spannrolle 18 und der gemeinsamen Drehachse 4 ist.

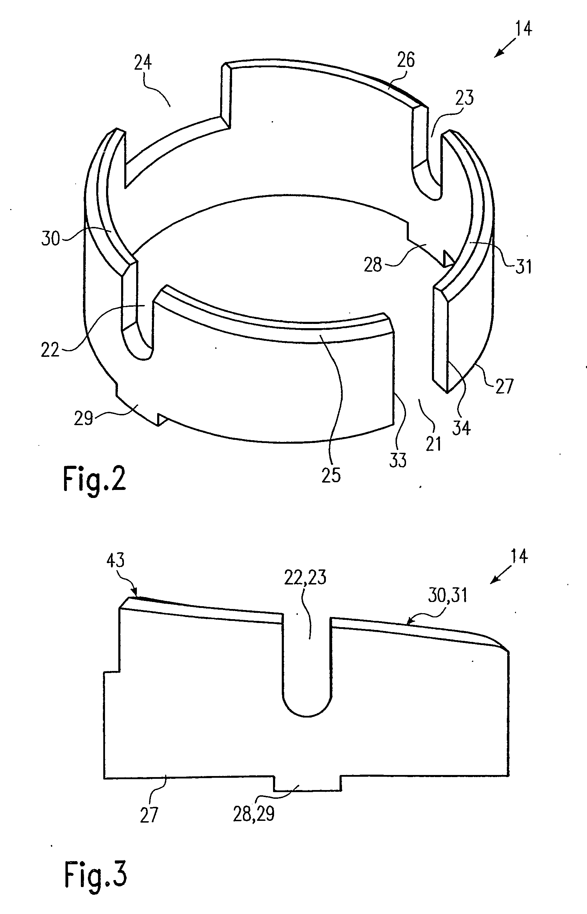

Figur 2 zeigt eine perspektivische Ansicht einer Schlingbuchse 14, die aus kugelverstärktem Kunststoff besteht. Dabei bewirkt die Glaskugelverstärkung eine Versteifung und eine Verfestigung der Schlingbuchse 14.

Die Schlingbuchse 14 besitzt in ihrem Umfang in axialer Richtung einen durchgehenden Schlitz 21. Der Schlitz 21 wird über eine seitlich linke Kante 33 und eine seitlich rechte Kante 34 gebildet. Die Schlingbuchse 14 weist an ihrem freien Ende 43 eine gebrochene äußere Randkante 26 auf. Die gebrochene Randkante 26 in Figur 2 ist über mehrere Aussparungen 22, 23, 24 und eine Fase 25 gebrochen.

Die Aussparungen 22, 23 besitzen eine Kontur eines Langlochs und sind in axialer Richtung im Umfang der Schlingbuchse diametral symmetrisch gegenüberliegend angeordnet.

Eine weitere Aussparung 24 besitzt eine eher rechteckige Kontur, die sich auf dem Umfang der Schlingbuchse 14 in axialer Richtung diametral symmetrisch gegenüberliegend zu dem Schlitz 21 befindet.

Die Fase 25 erstreckt sich um den gesamten Umfang der Schlingbuchse 14 und befindet sich in radialer Richtung an der Außenseite des freien Endes 43.

An der gegenüberliegenden Randkante 27 der Schlingbuchse 14 befinden sich zwei Absätze 28, 29. Die Absätze 28, 29 weisen eine rechteckige sich in axialer Richtung gegenüber der Randkante 27 abhebende Form auf.

Figur 3 zeigt die Seitenansicht der Schlingbuchse von Figur 2, wobei die Randkante 26 in einem Bereich ausgehend von der seitlich rechten Kante 34 des Schlitzes 26 eine dem Verlauf einer rechtsgängigen Federwindung und ausgehend von der seitlich linken Kante 33 eine dem Verlauf einer linksgängigen Federwindung entsprechende Steigung 30, 31 aufweist. Die Steigungen reichen jeweils bis zu der Aussparung 24.

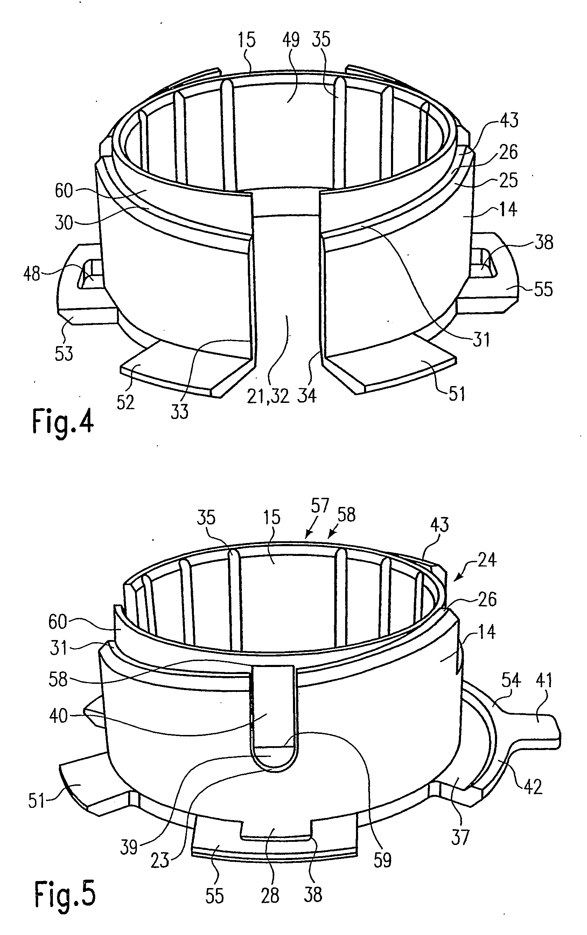

Figur 4 zeigt eine räumliche Darstellung einer Federbuchse 15 mit Schlingbuchse 14. Figur 5 zeigt eine gegenüber Figur 4 um 90° gedrehte Ansicht.

Figur 4 und Figur 5 zeigen an der Innenseite der Federbuchse 15 mehrere kerbenartige Vertiefungen 35. Die Vertiefungen 35 erstrecken sich längs der axialen Richtung der Federbuchse 15 über die gesamte Länge der Innenseite 49. In den Vertiefungen 35 wird Schmiermittel bevorratet.

Die Federbuchse 15 weist in ihrem Umfang in axialer Richtung einen durchgehenden Längsschlitz 32 auf. Die Federbuchse 15 besitzt einen in radialer Richtung auskragenden stützenden Fußbund 37, der über den Umfang in mehrere etwa gleichmäßig verteilte Bereiche 51, 52, 53, 54, 55 unterbrochen ist.

Die Bereiche 51, 52 sind spiegelsymmetrisch zueinander zu den Kanten des Schlitzes 32 angeordnet. Der Bereich 53 ist gegenüber dem Bereich 52 um ca. 90° im Uhrzeigersinn gedreht. Der Bereich 55 liegt in axialer Richtung dem Bereich 53 diametrisch symmetrisch gegenüber.

In den Bereichen 53, 55 befindet sich eine durchgehende längs der axialen Richtung angeordnete Aussparung 38, 48. Der Bereich 54 ist diametral gegenüber dem Schlitz 32 angeordnet und besitzt in radialer Richtung an seinem freien Ende umfangsseitig einen Steg 42. In dem Bereich 54 ist ein in radialer Richtung gegenüber dem Steg 42 auskragender Bereich einer Federendenauflage 41 ausgeformt.

An der Außenseite 60 der Federbuchse 15 befinden sich in axialer Richtung zwei Längsabsätze 39, 57 diametral gegenüber angeordnet. Sie erstrecken sich von der freien Randkante aus, die dem Fußbund axial gegenüberliegt. Der Absatz 39 weist in axialer Richtung eine geneigte Fläche 40 auf. Ausgehend von dem Anfang 58 der geneigten Fläche 40 steigt diese mit positiver Neigung bis zu einem Ende 59 an. Ab dem Ende 59 ist der Absatz 39 längs der axialen Richtung bis zu seinem Ende plan ausgeformt. Der Absatz 57 ist gleich dem Absatz 39 gestaltet.

In Figur 4 und Figur 5 ist die Schlingbuchse 14 auf die Federbuchse 15 so aufgesteckt, dass sich der Schlitz 21 der Schlingbuchse 14 mit dem Schlitz 32 der Federbuchse 15 in Deckung befindet. Die sich an der Schlingbuchse 14 befindlichen Halteabsätze 28, 29 sind mit den in der Federbuchse befindlichen Aussparungen 38, 48 verdrehsicher im Eingriff. Die Absätze 39, 58 fixieren die Schlingbuchse 14 über die Aussparung 22, 23 verdreh- und verrutschfest auf der Federbuchse 15.

Die geneigte Fläche 40 weitet die Schlingbuchse 14 bei einer Montage mit der Federbuchse 15 bis zu einer Eingriffsstellung auf. Die Schlingbuchse 14 kann gut über die Absätze 39, 57 rutschen, bis die Absätze 39, 57 in die Aussparungen 22, 23 der Schlingbuchse 14 vollständig eingreifen.

Die Schlingbuchse 14 und die Federbuchse 15 sind gemeinsam in einem Mehrkomponentenwerkzeug hergestellt worden. In diesem Mehrkomponentenwerkzeug können die Schlingbuchse 14 und die Federbuchse 15 durch Spritzen separat gefertigt werden, wobei beide Teile nach dem Spritzen getrennt ausgeworfen werden und zu montieren sind.

Wahlweise können, je nach Gestaltung des Mehrkomponentenwerkzeugs, die Schlingbuchse 14 und die Federbuchse 15 gemeinsam in dem Werkzeug gespritzt werden, so dass die Schlingbuchse und die Federbuchse das Werkzeug bereits im zusammengefügten Zustand verlassen, wie beispielsweise in den Figuren 4 und 5 dargestellt. Obwohl sie in demselben Werkzeug hergestellt werden, bleiben sie separate Teile, die relativ zueinander bewegbar sind.

Die Schlingbuchse 14 besteht aus kugelverstärktem Kunststoff, wobei es sich bei dem Kunststoff um einen Polyamid (PA 6.6) handelt, der mit Glaskugeln verstärkt wurde. Die Federbuchse besteht ausschließlich aus einem Polyamid (PA 4.6).

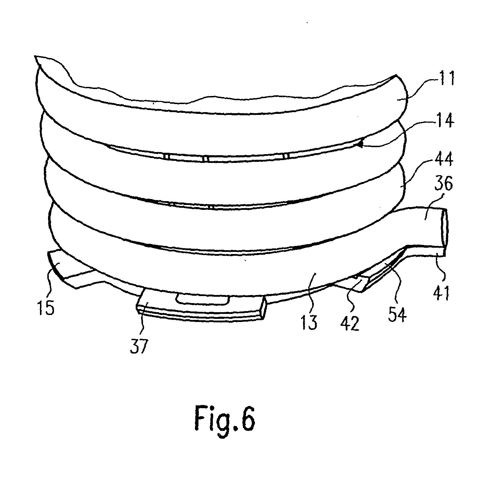

Figur 6 zeigt eine räumliche Darstellung einzelner Windungen einer Schraubenfeder 11, welche die Schlingbuchse 14 und die Federbuchse 15 umschlingen. Ein Federende 36 liegt auf der Federendenauflage 41 auf. Eine Windung 13 der Schraubenfeder 11 stützt sich an dem Steg 42 des stützenden Fußbunds 37 der Federbuchse 15 in radialer Richtung ab. Dabei liegt die Windung 13 der Schraubenfeder an dem Steg 42 an, womit eine gute Kraftübertragung gewährleistet wird. Das Federende 36 wird über die auskragende Federendenauflage 41 des Bereichs 54 bis zu einem Einrastbereich im Basisteil 2 sehr gut unterstützt. Die Windungen 13, 44 umschlingen die Schlingbuchse 14.

Wahlweise umschlingt die Schraubenfeder 11 die Schlingbuchse 14 mit weniger als einer ganzen Windung, insbesondere mit mehr oder gleich einer halben oder 0,7 Windungen.

Im Folgenden wird die Wirkungs- und Funktionsweise des in der Zeichnung dargestellten Ausführungsbeispiels eines erfindungsgemäßen automatischen Riemenspanners erläutert.

Ein in einem Riemensystem eines Kfz-Motors befindlicher Riemen wird mit einem automatischen Riemenspanner auf eine bestimmte Riemenspannung vorgespannt.

Der automatische Riemenspanner 1 befindet sich in einem vorgespannten Zustand, so dass eine witterungs- und/oder verschleißabhängige Riemenlängung von dem Riemenspanner 1 automatisch kompensiert wird.

Daneben wird durch ein Umlaufen des Riemens in einem Riemensystem der Riemen in Schwingung versetzt. Diese Riemenschwingungen werden auf den Umlenkarms 62 des Spannteils 3 übertragen.

Durch ein Verdrehen des Spannteils 3 gegenüber dem Basisteil 2 wird die Schraubenfeder 11 ausgelenkt und dabei radial vorgespannt. In Folge des Auslenkens der Schraubenfeder 11 wird diese mit einem Moment beaufschlagt, wobei sich der Innendurchmesser 45 der Schraubenfeder 11 vergrößert oder verkleinert. Das Moment der Schraubenfeder dreht das Spannteil 3 um die gemeinsame Drehachse 4, wobei der Umlenkarm 62 mit der Spannrolle 18 den Riemen auf eine bestimmte Riemenspannung vorspannt.

Die Schraubenfeder 11 erzeugt eine etwa gleichmäßig über den gesamten Umfang der Schlingbuchse 14 verteilte radiale Schlingkraft. Dabei verkleinert sich der Außendurchmesser 46 der Schlingbuchse und der Außendurchmesser 65 der Federbuchse 15. Die Federbuchse 15 wird mit ihrer Innenseite 16 an die Reibungsfläche 17 des Spannteils 3 gedrückt.

Dabei bildet sich eine reibschlüssige Verbindung zwischen der Reibungsfläche 17 des Spannteils 3 und der Innenseite 16 der Federbuchse 15 aus. Die reibschlüssige Verbindung ist so fest, dass das durch die Schraubenfeder 11 erzeugtes Moment auf das Spannteil 3 übertragen werden kann.

Die radiale Schlingkraft ist ausreichend groß, so dass zum einen das Moment auf das Spannteil 3 kontinuierlich übertragen werden kann und zum anderen eine genügend große Stabilität und Reibung an den benachbarten Bauteilen für die Schwingungsdämpfung erzeugt wird.

Das Material der Schlingbuchse 14 weist verstärkten Kunststoff auf, wodurch sich die umschlingenden Windungen 13, 44 der Schraubenfeder 11 besonders gut an die Schlingbuchse 14 anschmiegen können und es zu einer sehr guten kraftschlüssigen Verbindung kommt. Darüber hinaus ist die Schlingbuchse 14 ausreichend zäh und verschleißfest und hält über die gesamte Lebensdauer des automatischen Riemenspanners 1 den auftretenden Reibungen durch die Federbuchse 15 stand. Der verstärkte Kunststoff hält die Schlingbuchse 14 dauerhaft gut formstabil und verschleißfest.

Die Federwindung 44 der linksgängigen Schraubenfeder 11 kommt in einem Bereich an der gebrochenen Randkante 26 zum Anliegen, der eine dem Verlauf einer linksgängigen Federwindung entsprechende Steigung 30 aufweist. Die durch die Schraubenfeder 11 erzeugte Schlingkraft wird durch diese gute Unterstützung der Windung 44 fast ohne Kraft- und Momentenverluste auf die Schlingbuchse 14 übertragen.

Dieselbe Schlingbuchse 14 kann auch mit rechtsgängigen Schraubenfedern bestückt werden. Dabei ist sie je nach Spannungsrichtung am Einbauort universell verwendbar. Die Schlingbuchse 14 weist deshalb an der gebrochenen Randkante 26 zusätzlich noch einen Bereich, der mit dem Verlauf einer rechtsgängigen Federwindung entsprechenden Steigung 31 ausgestaltet ist, auf.

Bei den auftretenden Relativbewegungen zwischen der Federwindung 44 und der Schlingbuchse 14 kann sich die Federwindung 44 besonders sanft über die Fase 25 an der gebrochenen Randkante 26 ablösen.

Die dämpfende Festkörper- und Fluidreibung wird von der radialen Schlingkraft, den verwendeten Schlingbuchsen- und/oder Federbuchsenmaterialien und dem Schmiermittel beeinflusst. Bei einer bestimmten Ausführungsform dieser Parameter wurde der automatische Riemenspanner 1 statisch, z. B. mit der Frequenz von 2 Hertz, durch den Riemen angeregt und die Schwingung um etwa 40% gedämpft. Wurde dagegen der Riemenspanner 1 mit einer höheren Frequenz, z. B. 20 Hertz, angeregt, erhöhte sich die Reibdämpfung auf bis zu 55%. Die Dämpfung der Riemenschwingungen erfolgt über die gesamte Laufzeit stabil. Diese Werte können bei anderer Wahl der genannten Parameter variieren.

## Patentansprüche

1. Automatischer Riemenspanner (1) mit einem Basisteil (2), das mit einem Spannteil (3) um eine gemeinsame Drehachse (4) drehbar verbunden ist, einer Schraubenfeder (11), die mit dem Basisteil (2) und dem Spannteil (3) verbunden ist, einer Federbuchse (15), welche auf das Spannteil (3) aufgebracht und von der Schraubenfeder (11) umgeben ist, und einer Schlingbuchse (14), welche zwischen der Federbuchse (15) und der Schraubenfeder (11) vorgesehen ist und von der Schraubenfeder (11) wenigstens bereichsweise mit einer radialen Schlingkraft umschlungen wird,
**dadurch gekennzeichnet,**
**dass** das Material der Schlingbuchse (14) verstärkten Kunststoff aufweist.

2. Automatischer Riemenspanner (1) nach Anspruch 1,
**dadurch gekennzeichnet,**
**dass** der Kunststoff faserverstärkt ist, insbesondere Glasfasern zur Verstärkung enthält.

3. Automatischer Riemenspanner (1) nach Anspruch 1 oder 2,
**dadurch gekennzeichnet,**
**dass** der Kunststoff kugelverstärkt ist, insbesondere Glaskugeln zur Verstärkung enthält.

4. Automatischer Riemenspanner (1) nach wenigstens einem der Ansprüche 1 bis 3,
**dadurch gekennzeichnet,**
**dass** die Schlingbuchse (14) links- und rechtsgängige Schraubenfeder (11) aufnehmen kann.

5. Automatischer Riemenspanner (1) nach wenigstens einem der Ansprüche 1 bis 4,
**dadurch gekennzeichnet,**
**dass** eine Randkante (26) der Schlingbuchse (14) eine in einem Bereich den Verlaufeiner linksgängigen und in einem anderen Bereich den Verlauf einer rechtsgängigen Federwindung entsprechende Steigung (30, 31) aufweist.

6. Automatischer Riemenspanner (1) nach wenigstens einem der Ansprüche 1 bis 5,
**dadurch gekennzeichnet,**
**dass** die Schlingbuchse (14) von weniger als einer ganzen Windung (13, 44) der Schraubenfeder (11) umschlungen ist, insbesondere von mehr oder gleich einer halben oder 0,7 Windung.

7. Automatischer Riemenspanner (1) nach wenigstens einem der Ansprüche 1 bis 6,
**dadurch gekennzeichnet,**
**dass** die Schlingbuchse (14) an ihrem freien Ende (43) eine gebrochene Randkante (26) aufweist.

8. Automatischer Riemenspanner (1) nach wenigstens einem der Ansprüche 1 bis 7, wobei die Schlingbuchse (14) die Federbuchse (15) wenigstens bereichsweise umgibt,
**dadurch gekennzeichnet,**
**dass** die Schlingbuchse (14) mit der Federbuchse (15) drehfest verbunden ist.

9. Automatischer Riemenspanner (1) nach wenigstens einem der Ansprüche 1 bis 8, wobei die Schlingbuchse (14) eine Federbuchse (15) wenigstens bereichsweise umgibt,
**dadurch gekennzeichnet,**
**dass** eine dem freien Ende (43) gegenüberliegende Randkante (27) der Schlingbuchse (14) wenigstens einen Halteabsatz (28, 29) aufweist, der sich mit einer in der Federbuchse befindlichen Aussparung (38, 48) verdrehsicher in Eingriff befindet.

10. Automatischer Riemenspanner (1) nach wenigstens einem der Ansprüche 1 bis 9, wobei die Schlingbuchse (14) eine Federbuchse (15) wenigstens bereichsweise umgibt,
**dadurch gekennzeichnet,**
**dass** die Federbuchse (15) an ihrer Innenseite (49) wenigstens eine Vertiefung (35) zur Aufnahme von Schmiermittel aufweist.

11. Automatischer Riemenspanner (1) nach dem Anspruch 10,
**dadurch gekennzeichnet,**
**dass** die Vertiefung (35) sich in axialer Richtung erstreckt, insbesondere im Querschnitt kerbenartig ausgebildet ist.

12. Automatischer Riemenspanner (1) nach wenigstens einem der Ansprüche 1 bis 11, wobei eine von der Schlingbuchse (14) wenigstens bereichsweise umgebende Federbuchse (15) einen stützenden Fußbund (37) aufweist,
**dadurch gekennzeichnet,**
**dass** der stützende Fußbund (37) in mehrere über den Umfang verteilte Bereiche (51, 52, 53, 54, 55) unterbrochen ist.

13. Automatischer Riemenspanner (1) nach wenigstens einem der Ansprüche 1 bis 12, wobei eine von der Schlingbuchse (14) wenigstens bereichsweise umgebende Federbuchse (15) einen stützenden Fußbund (37) aufweist,
**dadurch gekennzeichnet,**
**dass** wenigstens ein Bereich (54) des Fußbunds (37) eine auskragende Federendenauflage (41) aufweist.

14. Automatischer Riemenspanner (1) nach wenigstens einem der Ansprüche 1 bis 13, wobei die Schlingbuchse (14) eine Federbuchse (15) wenigstens bereichsweise umgibt,
**dadurch gekennzeichnet,**
**dass** die Schlingbuchse (14) und die Federbuchse (15) gemeinsam in einem Mehrkomponentenwerkzeug hergestellt sind.

## Claims

1. Automatic belt tensioner (1) comprising a basic part (2) which is connected to a tensioning part (3) so as to be rotatable about a common axis of rotation (4), a helical spring (11): which is connected to the basic: part (2) and the tensioning part (3), a spring bush (15) which is fitted to the tensioning part (3) and is surrounded by the helical spring (11) and a wrapping bush (14) which is provided between the spring bush (15) and the helical spring (11) and is wrapped at least in some regions with a radial twisting force by means of the helical spring (11),
**characterised in that**
the material of the wrapping in bush 14 contains reinforced plastic.

2. Automatic belt tensioner (1) according to Claim 1,
**characterised in that**
the plastic is fibre reinforced and contains, in particular, glass fibres for the reinforcement.

3. Automatic belt tensioner (1) according to Claim 1 or 2,
**characterised in that**
the plastic is spherically reinforced and contains, in particular, glass spheres for the reinforcement.

4. Automatic belt tensioner (1) according to at least one of Claims 1 to 3,
**characterised in that**
the wrapping bush (14) can receive a left-handed and right-handed helical spring (11).

5. Automatic belt tensioner (1) according to at least one of Claims 1 to 4,
**characterised in that**
one peripheral edge (26) of the wrapping bush (14) has a pitch (30, 31) that corresponds in one region to the course of a left-handed spring turn and in another region to the course of a right-handed spring turn.

6. Automatic belt tensioner (1) according to at least one of Claims 1 to 5,
**characterised in that**
the wrapping bush (14) is wrapped by less than one whole turn (13, 44) of the helical spring (11), in particular by more than or equal to one half or 0.7 of a turn.

7. Automatic belt tensioner (1) according to at least one of Claims 1 to 6,
**characterised in that**
the wrapping bush (14) has at its free end (43) a broken peripheral edge (26).

8. Automatic belt tensioner (1) according to at least one of Claims 1 to 7, wherein the wrapping bush (14) surrounds the spring bush (15) at least in some regions,
**characterised i**n that
the wrapping bush (14) is fixedly connected to the spring bush (15).

9. Automatic belt tensioner (1) according to at least one of Claims 1 to 8, wherein the wrapping bush (14) surrounds a spring bush (15) at least in some regions,
**characterised in that**
a peripheral edge (27)of the wrapping bush (14) opposing the free end (43) has at least one retaining shoulder (28, 29) which is in distortion-proof engagement with a recess (38, 48) located in the spring bush.

10. Automatic belt tensioner (1) according to at least one of Claims 1 to 9, wherein the wrapping bush (14) surrounds a spring bush (15)' at least in some regions,
**characterised in that**
the spring bush (15) has on its inside (49) at least one recess (35) for receiving lubricant.

11. Automatic belt tensioner (1) according to Claim 10,
**characterised in that**
the recess (35) extends in the axial direction, in particular in cross-section in the manner of a notch.

12. Automatic belt tensioner (1) according to at least one of Claims 1 to 11, wherein a spring bush (15) surrounded by the wrapping bush (14) at least in some regions, has a supporting foot collar (37),
**characterised in that**
the supporting foot collar (37) is interrupted in a plurality of regions (51, 52, 53, 54, 55) distributed around the circumference.

13. Automatic belt tensioner (1) according to at least one of Claims 1 to 12. wherein a spring bush (15) surrounded by the wrapping bush (14) in at least some regions, has a supporting foot collar (37),
**characterised In that**
at least one region (54) of the supporting foot collar (37) has a projecting spring end support (41).

14. Automatic belt tensioner (1) according to at least one of Claims 1 to 13, wherein the wrapping bush (14) surrounds a spring bush (15) at least in some regions,
**characterised in that**
the wrapping bush (14) and the spring bush (15) are produced together in a multicomponent tool.

## Revendications

1. Tendeur de courroie automatique (1) comportant une pièce de base (2) qui est reliée à une pièce de tension (3) de façon à pouvoir tourner autour d'un axe de rotation commun (4), un ressort hélicoïdal (11) qui est relié à la pièce de base (2) et à la pièce de tension (3), une douille de ressort (15) qui est montée sur la pièce de tension (3) et qui est entourée par le ressort hélicoïdal (11), et une douille d'enroulement (14) qui est agencée entre la douille de ressort (15) et le ressort hélicoïdal (11) et sur laquelle est enroulé le ressort hélicoïdal (11), au moins par zones, avec une force d'enroulement radiale,
**caractérisé en ce que**
le matériau de la douille d'enroulement (14) comporte de la matière plastique renforcée.

2. Tendeur de courroie automatique (1) selon la revendication 1, **caractérisé en ce que** la matière plastique est renforcée par des fibres, en particulier contient des fibres de verre de renforcement.

3. Tendeur de courroie automatique (1) selon la revendication 1 ou 2, **caractérisé en ce que** la matière plastique est renforcée par des billes, en particulier contient des billes de verre de renforcement.

4. Tendeur de courroie automatique (1) selon l'une au moins des revendications 1 à 3, **caractérisé en ce que** la douille d'enroulement (14) peut recevoir un ressort hélicoïdal (11) à pas à droite et à pas à gauche.

5. Tendeur de courroie automatique (1) selon l'une au moins des revendications 1 à 4, **caractérisé en ce qu'**un bord (26) de la douille d'enroulement (14) a une rampe (30, 31) qui correspond dans une région à la progression d'un enroulement de ressort à gauche, et dans une autre région à la progression d'un enroulement de ressort à droite.

6. Tendeur de courroie automatique (1) selon l'une au moins des revendications 1 à 5, **caractérisé en ce que** la douille d'enroulement (14) est entourée par moins d'une spire complète (13, 44) du ressort hélicoïdal, notamment par une quantité supérieure ou égale à une moitié ou à 0,7 spire.

7. Tendeur de courroie automatique (1) selon l'une au moins des revendications 1 à 6, **caractérisé en ce que** la douille d'enroulement (14) comporte à son extrémité libre (43) un bord chanfreiné (26).

8. Tendeur de courroie automatique (1) selon l'une au moins des revendications 1 à 7, dans lequel la douille d'enroulement (14) entoure au moins par zones la douille de ressort (15), **caractérisé en ce que** la douille d'enroulement (14) est reliée solidairement en rotation à la douille de ressort (15).

9. Tendeur de courroie automatique (1) selon l'une au moins des revendications 1 à 8, dans lequel la douille d'enroulement (14) entoure au moins par zones la douille de ressort (15), **caractérisé en ce qu'**un bord (27) de la douille d'enroulement (14), lequel bord est opposé à l'extrémité libre (43), comporte au moins une saillie de blocage (28, 29) qui est en prise, sans pouvoir tourner, avec un évidement associé (38, 48) prévu dans la douille de ressort.

10. Tendeur de courroie automatique (1) selon l'une au moins des revendications 1 à 9, dans lequel la douille d'enroulement (14) entoure au moins par zones la douille de ressort (15), **caractérisé en ce que** la douille de ressort (15) comporte sur son côté intérieur (49) au moins un creusement (35) destiné à recevoir des moyens de lubrification.

11. Tendeur de courroie automatique (1) selon la revendication 10, **caractérisé en ce que** le creusement (35) s'étend dans une direction axiale, notamment est conformé en rainure en coupe transversale.

12. Tendeur de courroie automatique (1) selon l'une au moins des revendications 1 à 11, dans lequel la douille de ressort (15) qui est entourée au moins par zones par la douille d'enroulement (14) comporte un empattement d'appui (37), **caractérisé en ce que** l'empattement d'appui (37) est divisé en plusieurs zones (51, 52, 53, 54, 55) réparties sur la périphérie.

13. Tendeur de courroie automatique (1) selon l'une au moins des revendications 1 à 12, dans lequel la douille de ressort (15) qui est entourée au moins par zones par la douille d'enroulement (14) comporte un empattement d'appui (37), **caractérisé en ce qu'**au moins une zone (54) de l'empattement (37) comporte un appui d'extrémité de ressort (41) en saillie.

14. Tendeur de courroie automatique (1) selon l'une au moins des revendications 1 à 13, dans lequel la douille d'enroulement (14) entoure au moins par zones la douille de ressort (15), **caractérisé en ce que** la douille d'enroulement (14) et la douille de ressort (15) sont fabriquées conjointement dans un outil à plusieurs composants.
